# EUROPEAN PATENT SPECIFICATION

(11) **EP 0 776 435 B1**
(45) Date of publication and mention of the grant of the patent: **09.08.2000**
(21) Application number: 94926250.5
(22) Date of filing: 12.09.1994
(51) Int. Cl.: F16J 15/50, G01B 3/00

(54) **ADAPTATION FOR TIGHTENING A LEAD-THROUGH MEMBER**
FESTSTELLVORRICHTUNG FÜR FESTSTEHENDE TEILE
DISPOSITIF DESTINE A BLOQUER UN ELEMENT TRAVERSANT

(30) Priority: 10.09.1993 FI 93453 U
(43) Date of publication of application: 04.06.1997
(73) Proprietor: ENFOPLAN OY, FIN-33400 Tampere (FI)
(72) Inventor: KOSKINEN, Pertti, FIN-33230 Tampere (FI)
(74) Representative: Nieminen, Taisto Tapani
(86) International application number: PCT/FI94/00397
(87) International publication number: WO 95/07423

(56) References cited:
- DE-A- 2 254 383
- DE-C- 3 030 540
- US-A- 4 600 203

## Description

This invention relates to an arrangement according to patent claim 1, by means of which an element, movable in an oblong slit, is sealed.

Previously known as sealings of inaccurate and their form changing slits are rubber tubes shaped into sealings. One or several tubular sealings have been installed in a slit or arranged in pairs on both sides of the slit. When tubular sealings are made airtight and furnished with the possibility to lead pressure air or retain pressure in the tube, a sealing is produced that yields and allows much play between the parts that have to be sealed. At a proper moment, pressure air is fed to the sealing, for instance when a door, which must be shut, has been closed, whereat the pressure in the tubular sealing does not hinder the closing of the door.

US Patent 4,600,203 discloses a slit-type sealing arrangement where separate thin plates or sheets are mounted on each side of the longitudinal slit, respectively. These plates are made of low friction and corrosion resistant material as of polytetrafluorethylene. Moreover each sealing plates are supported by a respective supporting elements constructed as a flexible tube. Gliding problems and need of lubrication have been solved by using a separate thin sheet of low friction material mounted against the moveable element. Any lubricant is not used.

DE publication 2 254 383 discloses sealing arrangement where flexible sealing is mounted round a shaft. A pressurized medium is supplied into the gliding surface between the shaft and the sealing. The solution cannot be applied to seal an elongated slit through which a moveable follower has to be conveyed in a longitudinal direction.

In the solution as per this invention tubular sealings are, in a new way, adapted to the sealing function of the element that is moved in or moves in respect to the slit as well as to the sealing function of the slit, whereby the special requirements of the moving element have been taken into account, in order to maintain tightness and reduce friction and wear. The invention is characterized in what is represented in the introduction section of the patent claims.

The most important advantages of the invention can be considered that the movable element in the slit, can be made reliably sealed, partly due to reduced friction, whereat the tubular sealings do not wrinkle by the slide between themselves and the moving element, and that the reliability is further increased by the notable decrease of wear of the sealing tubes thanks to lubrication by pressure air. Pressure air or other flow to the sealing face also keeps the sealing face free from durt. Pressure fed to the sealing face with possible lubrication medium contained in it, secures the start of the element without damaging the sealing even case of quite a long break of operation in between. The pressure is then allowed to affect the sealing face before the element is set into motion.

In the following the invention is presented in detail with reference to the enclosed drawing, where
Fig. 1 is an element in a slit that has to be sealed, viewed from the end.
Fig. 2 is a diagonal view of an element moving in a slit.

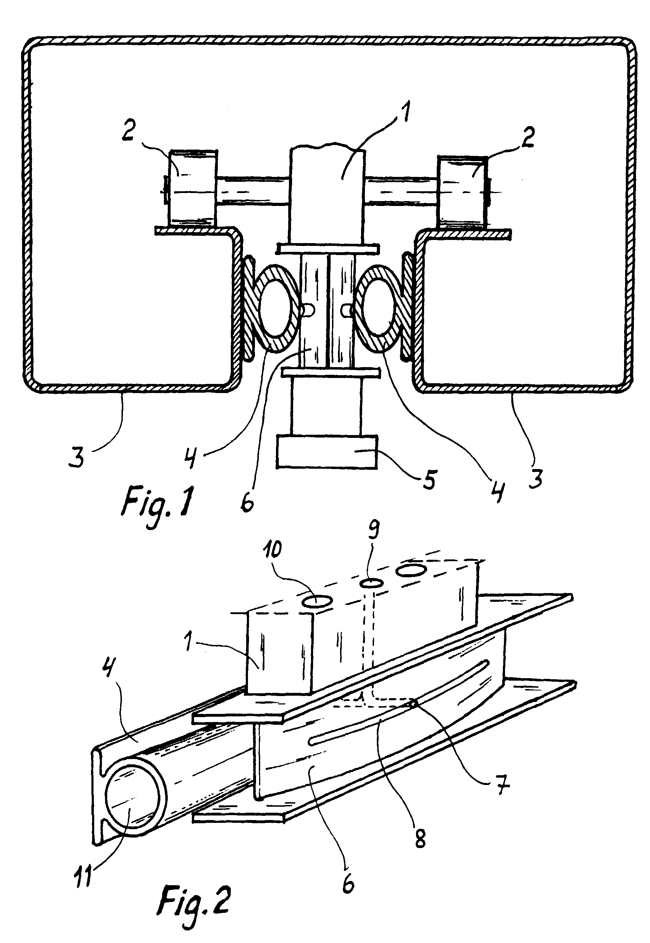

Figure 1 shows the end view of a slit that must be sealed and is formed in a tubular profile beam 3. In the beam a mechanism, only a part of which is shown in the figure, is arranged to move element 1 in the tubular beam direction. In both edges of the slit tubular rubber sealings 4 are glued, the profile of which comprises a planelike section for gumming and the actual tubular part. The slit is sealed by tubular rubber sealings when pressure air is fed into tubes 4. The tube sides touch each other and close the slit.

The sectional view in figure 1 shows the location of element 1. The element 1 is supported on the beam edges by rollers 2 travelling along the edges. At the sealing tubes 4 the element has a portion 6 tapering off towards its ends and a measuring sensor 5. Thus the measuring sensor 5 can, as a movable part, be taken to a space of different climate by means of the said slit sealing. Measuring device 5 or any other instrument is placed in hard and difficult conditions, for instance for crosswise measuring of web in a paper machine. By means of slight over-pressure, normal climate can be produced inside the profile beam thanks to the sealing function.

Figure 2 shows a diagonal view of element 1. Part 6, which tapers off towards its ends, is in slide contact with sealing tubes 4. Thanks to tapering, the sealing tubes adjust well to the surface of part 6 and neither does the part strive to damage the tubes. On the sliding surface of part 6 there is a groove 8 into which pressure air is fed through a hole 7 along canalization 9. A slight air leak from groove 8 and the pressure impact on the side of tube 4 reduce friction, substantially, in the sliding surface and, accordingly, also wear of tube 4. The pressure air can contain lubrication oil or other medium. In addition to pressure air, pressurized gases or liquids can also be fed to groove 8, upon need. The flow of these mediums on the sealing surface keeps also the surface clean. The pressurized gas fed to the groove can be same gas, by means of which overpressure is maintained on either side of the sealing face.

By means of the solution measuring devices or similar sensing devices, sampling collectors, feed nozzles or tools can be taken through the sealing face into any other condition, where the climate can be, for instance, durty, corrosive or toxic. Anyhow, the conveying devices of the elemnt are in a clean climate, for instance inside the profile beam, securing the the travel function.

The invention is not restricted to the enclosed embodiment but modifications are possible within the inventional concept determined by the enclosed patent claims. The solution according to the invention can be adapted utilizing one tubular sealing 4, whereby one side of part 6 is curved, as per figure 2, and the other side is flat. The cruved side is against the tubular sealing 4 and the flat side is against the sliding face formed in the other edge of the slit. The flat side can also be furnished with a hole 7 and a groove 8.

In an embodiment a tube beam 3 is used as the movable part while the element is kept immobile.

## Claims

1. An arrangement for sealing an element (1) which is relatively moveable with respect to an elongate slit, and for reducing friction at a sliding interface between said element and a seal for said slit, said seal comprising at least one pressurized tubular sealing member (4) and said element including a tapering part (6) tapering down towards the ends thereof, characterized in that one side of said tapering part including a hole (7) for feeding a pressurized medium to the sliding interface between the seal (4) and the part (6), and at least portion of said part of said element including an elongate groove (8) in communication with said hole and along which said pressurized medium, for instance air, supplied through said hole is fed.

2. An arrangement according to claim 1 **characterized** in that the slit to be sealed, is formed in a negatively or positively pressurized beam (3) parallel to said slit.

3. An arrangement according to claim 2 **characterized** in that in the beam there is a positively pressurized clean space and an instrument (5) on the outer side of the beam (3) can be moved by means of the element (1) that runs through the sealed slit.

4. An arrangement according to anyone of the claims 1 - 3 **characterized** in that one side of the tapering part (6) is flat.

5. An arrangement according to anyone of the claims 1 - 4 **characterized** in that a lubricant is fed to said groove to lubricate the sliding interface.

6. An arrangement according to anyone of the claims 1 - 5 **characterized** in that the slit to be sealed is moveable and the element (1) is immobile.

## Patentansprüche

1. Eine Komposition zum Dichten eines Elements (1), das sich relativ im Verhältnis zu einem länglichen Spalt bewegt, und zum Reduzieren der Friktion in einer gleitenden Schnittstelle zwischen dem erwähnten Element und eine Dichtung des erwähnten Spalts, wobei die erwähnte Dichtung wenigstens einen röhrenförmigen dichtenden Druckteil (4) enthält, und das erwähnte Element einen zuspitzenden Teil (6) hat, der sich nach unten gegen seine beiden Enden zuspitzt, **gekennzeichnet** dadurch, dass es auf einer Seite des zuspitzenden Teils zur Speisung von Druckmedium auf die Schnittstelle zwischen Dichtung (4) und Teil (6) ein Loch (7) gibt, und dass wenigstens ein Teil des erwähnten Teils des erwähnten Elements eine Rille (8) in Verbindung mit dem erwähnten Loch hat, und dass entlang diese Rille Druckmedium, z.B. Luft, durch das erwähnte Loch gespeist wird.

2. Eine Komposition gemäß Anspruch 1 **gekennzeichnet** dadurch, dass der Spalt, der gedichtet werden muss, entweder negativ oder positiv in einem Überdruckbalken, (3), parallel mit dem erwähnten Spalt, gebildet worden ist

3. Eine Komposition gemäß Anspruch 2 **gekennzeichnet** dadurch, dass es im dem Balken ein sauberer Raum, im positiven Grade mit Druck versehen, gibt, und ein Instrument (5) auf der Außenseite des Balkens (3) kann mit Hilfe des Elements (1), das durch den gedichteten spalt läuft, bewegt werden.

4. Eine Komposition gemäß einem der obigen Ansprüche 1 - 3 **gekennzeichnet** dadurch, dass eine Seite des zuspitzenden Teils (6) gerade ist.

5. Eine Komposition gemäß einem der obigen Ansprüche 1 - 4 **gekennzeichnet** dadurch, dass Schmiermittel zu der erwähnten Rille, zum schmieren der gleitenden Schnittstelle, gespeist wird.

6. Eine Komposition gemäß einem der obigen Ansprüche 1 - 5 **gekennzeichnet** dadurch, dass der Spalt, der gedichtet werden muss, beweglich weil das Element (1) unbeweglich ist.

## Revendications

1. Un mécanisme pour rendre étanche un élément (1) relativement mobile par rapport à une fente longitudinale et pour réduire la friction contre les faces de glissement entre ledit élément et une garniture d'étanchéité de ladite fente, ladite garniture comportant au moins un élément d'étanchéité (4) tubulaire sous pression et ledit élément comportant une pièce en forme de cône (6) se rétrécissant vers les deux extrémités, caractérisé en ce qu'un côté de ladite pièce en forme de cône est muni d'un trou (7) pour l'alimentation du milieu sous pression vers les faces de glissement entre l'élément d'étanchéité (4) et la pièce (6), et en ce que ladite pièce dudit élément comporte, au moins sur une partie des faces de glissement, une longue rainure (8) qui communique avec ledit trou pour conduire ledit milieu sous pression, l'air par exemple, qui est alimenté à travers ledit trou.

2. Un mécanisme selon la revendication 1,caractérisé en ce que la fente à rendre étanche a été pratiquée dans une poutrelle (3) sous pression négative ou positive, parallèlement à ladite fente.

3. Un mécanisme selon la revendication 2, caractérisé en ce qu'il y a un espace propre sous pression positive dans la poutrelle et en ce qu'un instrument (5) placé sur le côté extérieur de la poutrelle (3) peut être déplacé au moyen de l'élément (1) qui traverse la fente scellée.

4. Un mécanisme selon l'une quelconque des revendications 1 à 3, caractérisé en ce que l'un des côtés de la pièce en forme de cône (6) est plat.

5. Un mécanisme selon l'une quelconque des revendications 1 à 4, caractérisé en ce qu'un lubrifiant est conduit dans ladite rainure afin de lubrifier les faces de glissement.

6. Un mécanisme selon l'une quelconque des revendications 1 à 5, caractérisé en ce que la fente à rendre étanche bouge tandis que l'élément (1) reste immobile.
